# EUROPÄISCHE PATENTANMELDUNG

(11) **EP 0 551 552 A2**
(43) Veröffentlichungstag der Anmeldung: **21.07.1993**
(21) Anmeldenummer: 92102462.6
(22) Anmeldetag: 14.02.1992
(51) Int. Cl.: F16D 3/56

(54) **Flexible Verbindungsanordnung zur Drehmomentübertragung**

(30) Priorität: 17.01.1992 DE 9200486 U
(71) Anmelder: TECHNISCHE FEDERN SIGMUND SCHERDEL GmbH, D-95615 Marktredwitz (DE)
(72) Erfinder: Gasteiger, Hans, W-8590 Marktredwitz-Waldershof (DE)
(74) Vertreter: Matschkur, Götz, Lindner Patent- und Rechtsanwälte

(57) **Zusammenfassung**

Mechanische Verbindungsanordnung zur Übertragung eines Drehmomentes zwischen einem Antriebs- und einem Abtriebselement, welche um eine gemeinsame Achse drehbar angeordnet sind, wobei das Antriebs- und Abtriebselement miteinander durch ein radial und axial auslenkbares, federelastisches Verbindungselement gekoppelt sind.

## Beschreibung

Die Erfindung betrifft eine Verbindungsanordnung zur Übertragung eines Drehmomentes zwischen einem Antriebs- und einem Abtriebselement, welche um eine gemeinsame Achse drehbar angeordnet sind.

Es ist allgemein bekannt, bei beispielsweise koaxial ineinandergelagerten Antriebselementen diese mittels einer Flanschverbindung starr miteinander zu verbinden, so daß eine Drehmomentübertragung von innen nach außen oder umgekehrt ermöglicht wird. Eine derartige starre Verbindung weist jedoch den Nachteil auf, daß eine radiale oder axiale Relativbewegung von An- und Abtriebselement zueinander nicht mehr möglich ist.

Der Erfindung liegt die Aufgabe zugrunde, ein Verbindungselement zur Übertragung eines Drehmomentes zu schaffen, welches geeignet ist, Relativbewegungen von An- und Abtriebselementen zueinander zuzulassen.

Diese Aufgabe wird bei einer flexiblen Verbindung zur Drehmomentübertragung mit den eingangs genannten Merkmalen erfindungsgemäß dadurch gelöst, daß das Antriebs- und Abtriebselement durch ein radial und axial auslenkbares, federelastisches Verbindungselement, insbesondere Federelement, miteinander gekoppelt sind.

Die mit der Erfindung erzielbaren Vorteile bestehen insbesondere darin, daß antriebsbedingte Störkräfte und -momente wie erwärmungsbedingte Materialausdehnungen nicht unmittelbar vom Antriebselement auf das Abtriebselement oder umgekehrt übertragen werden. Durch diese Maßnahme wird eine gute Laufruhe des Abtriebselementes erreicht. Auch Exzentrizitäten zwischen An- und Abtriebselement können ausgeglichen werden.

Es ist weiterhin möglich, das Antriebselement gegenüber dem Abtriebselement nicht nur radial und axial, sondern auch schräg zu verstellen. Hierdurch ergibt sich eine große Anzahl von Anordnungsmöglichkeiten von An- und Abtriebselementen.

In vorteilhafter Weise ist das erfindungsgemäße Verbindungselement aus federelastischem Material hergestellt, so daß bei einer Auslenkung von Antriebs- zu Abtriebselement Rückstellkräfte erzeugt werden, die das Bestreben aufweisen, das An- oder Abtriebselement in die Ausgangslage zurückzuverbringen.

In vorteilhafter Ausgestaltung ist das Verbindungselement ein mit einer oder mehreren Windungen versehener, drahtförmiger Körper, welcher zur Erzielung von Rückstellkräften sowohl mit dem Antriebs-, als auch mit dem Abtriebselement formschlüssig, lösbar oder unlösbar verbunden ist. Eine kraftschlüssige Verbindung unter Verzicht auf Rückstellkräfte liegt ebenfalls im Rahmen der Erfindung.

Der Drahtkörper kann je nach Größe der zu übertragenden Drehmomente aus Metall (vorzugsweise Federstahl), Kunststoff, Kohlefaser usw. hergestellt sein. Der Drahtquerschnitt kann hierbei wahlweise eine Kreisring- oder Polygonalform aufweisen.

In weiterer vorteilhafter Ausgestaltung sind die Windungen des Verbindungselementes in einer Ebene und/oder mäanderförmig angeordnet, so daß nur ein kleiner, insbesondere flacher Bauraum benötigt wird. Bei ausreichend vorhandenem Bauraum ist es jedoch auch möglich, die Windungen des oder der Verbindungselemente dreidimensional derart anzuordnen, daß diese in verschiedenen Ebenen liegen.

In spezieller Ausgestaltung des Erfindungsgegenstandes wird vorgeschlagen, das Verbindungselement formschlüssig lösbar, z. B. mittels einer Schraubverbindung an einem äußeren Flanschring (z. B. Antriebsflansch) und formschlüssig unlösbar an einem koaxial darin angeordneten inneren Flanschring (z. B. Kraftübertragungsflanschring) zu befestigen. Bei dieser Anordnung ist die formschlüssige unlösbare Befestigung eine Durchstanzung am inneren Flanschring, durch welche ein oder mehrere Enden des Verbindungselementes durchgesteckt und dann darin verstemmt sind.

Als formschlüssige lösbare Befestigung des Verbindungselementes am inneren Flanschring wird weiterhin vorgeschlagen, einen Klemmblock in Form einer anschraubbaren Schelle vorzusehen.

In weiterer speziellerer Ausführung ist eine kraftschlüssige Verbindung zwischen Verbindungselement und innerem Flanschring vorgesehen, indem die Enden des Verbindungselementes in der Bohrung eines am inneren Flanschring befestigten Blocks radial geführt werden. Hierbei wird eine auslegungsbedingte radiale Rückstellkraft stark vermindert.

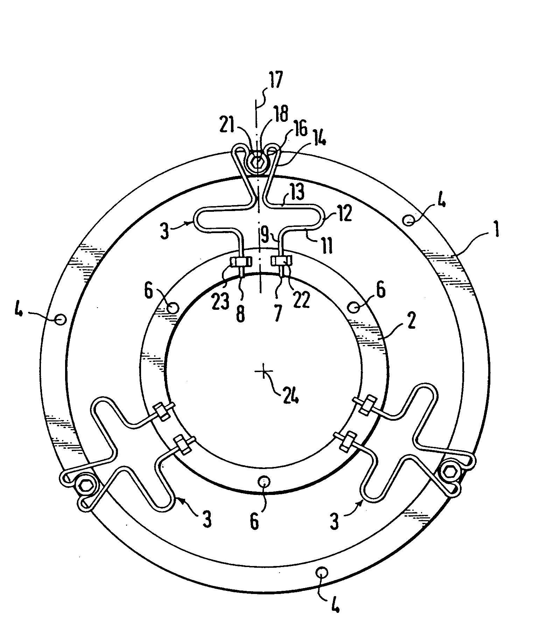

Weitere Einzelheiten, Merkmale und Vorteile auf der Basis der Erfindung ergeben sich aus der nachfolgenden Beschreibung eines bevorzugten Ausführungsbeispieles der Erfindung sowie aus der Zeichnung. Diese zeigt eine Draufsicht auf zwei koaxial ineinander angeordnete Flanschringe mit erfindungsgemäßen Verbindungselementen.

Wie dargestellt, ist ein äußerer Flanschring 1 (z. B. Antriebsflansch) koaxial zu einem inneren Flanschring 2 (z. B. Kraftübertragungsflansch) angeordnet. Der äußere Flanschring 1 und der innere Flanschring 2 sind mittels einer Mehrzahl, vorzugsweise drei flexibler Verbindungselemente 3 miteinander zum Antrieb verbunden. Beide Flanschringe 1, 2 weisen jeweils eine Anzahl von Durchgangsbohrungen 4, 6 zur Befestigung von nicht dargestellten An- bzw. Abtriebsmitteln auf. Hierbei kann sowohl der äußere, als auch der innere Flanschring der Antriebsflansch oder der Kraftübertragungsflansch sein.

Das Verbindungslement 3 besteht aus einem mäanderförmig gebogenen Strang- oder Drahtkörper, dessen als Schleifen 12, 16 realisierte Windungen vorzugsweise in einer Ebene angeordnet sind. Von einem ersten Ende 7 des Drahtkörpers des Verbindungselementes 3 ausgehend, weist dieser zunächst eine z. B. 10 mm langen Geradenabschnitt 9 auf, auf die eine im rechten Winkel nach rechts angeordnete Biegung folgt. Nach einer kurzen Geraden 11 mit einer Länge von z. B. ca. 10 mm ist eine 180 Grad-Schleife 12 vorgesehen, an die sich wiederum eine Gerade 13 mit einer Länge von z. B. ca. 20 mm anschließt. Auf die Gerade 13 folgt eine Rechtsbiegung von z. B. ca. 100 Grad mit einer anschließenden z. B. ca. 20 mm langen Geradenabschnitt 14, an welche sich wiederum eine S-Schleife 16 mit zum Geradenabschnitt 14 parallelen Mittelabschnit anschließt. Der weitere Verlauf des Drahtkörpers ist spiegelsymmetrisch zum bisherigen Verlauf, bezogen auf eine durch einen Befestigungspunkt 18 am äußeren Flanschring 1 hindurchgehende Spiegel- beziehungsweise Symmetrieachse 17.

Das Verbindungselement 3 ist im Bereich seiner S-Schleife 16 mittels eines lösbaren Befestigungsmittels 21 (z. B. Klemm-Schraubverbindung) mit einer Stirnseite des äußeren Flanschringes 1 formschlüssig und lösbar verbunden. Die Enden 7, 8 des Verbindungselementes 3 sind jeweils durch an der Stirnseite des inneren Flanschringes 2 angeordnete Durchstanzungen 22, 23 hindurchgesteckt und in diesen unlösbar formschlüssig mit dem inneren Flanschring 2 verbunden (z. B. verstemmt).

Bei einer zweiten Ausführungsform (nicht dargestellt) ist zur Befestigung der Enden 7, 8 am inneren Flanschring 2 eine lösbare, formschlüssige Verbindung vorgesehen. Diese weist einen Klemmblock mit zwei Nuten zur Aufnahme der Enden 7, 8 auf. Der Klemmblock wird mittels einer oder mehrerer Schraubverbindungen an der Stirnseite des inneren Flanschringes 2 befestigt und klemmt hierbei die Enden 7, 8 zwischen Klemmblock und Flanschring 2 fest.

Bei einer weiteren Ausführungsform (nicht dargestellt) sind die Enden 7, 8 kraftschlüssig mit dem inneren Flanschring 2 verbunden, d. h. sie werden in den Durchstanzungen oder Nuten mit kleinem Spiel geführt. Durch diese Maßnahme ist eine Kraft- oder Drehmomentübetragung zwischen äußerem und innerem Flanschring 1, 2 bei gleichzeitiger verringerter radialer Rückstellkraft gewährleistet.

Bei einer axialen Auslenkung, d. h. der innere Flanschring 2 wird entlang einer Achse 24 relativ zum Flanschring 1 verschoben, erfährt das Verbindungselement 3 eine federnde Durchbiegung, die das Bestreben hat, den inneren Flanschring 2 relativ zum äußeren Flanschring 1 wieder in die Ausgangsstellung zurückzustellen. Eine Drehmomentübertragung wird hierbei nicht beeinflußt.

Bei einer radialen Auslenkung, d. h. der innere Flanschring 2 wird relativ zum äußeren Flanschring 1 radial verschoben, wird diese Lageveränderung dadurch kompensiert, daß die Verbindungslemente 3, teils federnd zusammengedrückt, teils federnd auseinandergezogen werden. Hierbei liegt jeweils das Bestreben vor, die koaxiale Ausgangsstellung zwischen den Flanschringen 1, 2 wieder herzustellen.

Aufzubringende Federkräfte sind in besonderem Maß durch die Parameter Drahtstärke und Länge der Geraden 11, 13 gekennzeichnet.

Die in bevorzugter Ausführung in einer Ebene angeordneten Windungen des Verbindungselementes 3 können zur Erhöhung der Ausführungsmöglichkeiten bei ausreichendem Platzangebot auch in verschiedenen Ebenen, d. h. dreidimensional, räumlich angeordnet sein.

## Patentansprüche

1. Mechanische Verbindungsanordnung zur Übertragung eines Drehmomentes zwischen einem Antriebs- und einem Abtriebselement (1, 2), welche um eine gemeinsame Achse (24) drehbar angeordnet sind, dadurch gekennzeichnet, daß das Antriebs- und Abtriebselement (1, 2) miteinander durch ein radial und axial auslenkbares, federelastisches Verbindungselement (3) gekoppelt sind.

2. Verbindungsanordnung nach Anspruch 1, dadurch gekennzeichnet, daß das Verbindungselement (3) aus einem strangartigen Körper mit einer oder mehreren Windungen (12, 16) gebildet ist.

3. Verbindungsanordnung nach Anspruch 2, dadurch gekennzeichnet, daß zwischen den Windungen (12, 16) des Verbindungselementes (3) eine oder mehrere geradlinige Abschnitte (11, 13, 14) angeordnet sind.

4. Verbindungsanordnung nach Anspruch 2 oder 3, dadurch gekennzeichnet, daß die Windungen (12, 16) und/oder gegebenenfalls geradlinigen Abschnitte (11, 13, 14) des Verbindungselementes (3) in einer Ebene und/oder mäanderförmig angeordnet sind.

5. Verbindungsanordnung nach Anspruch 2 oder 3, dadurch gekennzeichnet, daß die Windungen (12, 16) und/oder geradlinigen Abschnitte (11, 13, 14) des Verbindungselementes (3) in unterschiedlichen Ebenen verlaufend angeordnet sind.

6. Verbindungsanordnung nach einem der vorhergehenden Ansprüche, dadurch gekennzeichnet, daß das Verbindungselement (3) einen Querschnitt in Kreisring- oder Polygonalform aufweist.

7. Verbindungsanordnung nach einem der vorhergehenden Ansprüche, dadurch gekennzeichnet, daß das Verbindungselement (3) aus Metall oder Kunststoff oder Kohlefaser hergestellt ist.

8. Verbindungsanordnung nach einem der vorhergenden Ansprüche, dadurch gekennzeichnet, daß das Verbindungselement (3) mit dem An-und/oder Abtriebselement (1; 2) formschlüssig und/oder lösbar verbunden ist.

9. Verbindungsanordnung nach einem der vorhergehenden Ansprüche, dadurch gekennzeichnet, daß das Verbindungselement (3) mit dem An- oder Abtriebselement (1; 2) eine formschlüssige Verbindung und mit dem jeweils anderen Ab- oder Antriebselement (2; 1) eine kraftschlüssige Verbindung aufweist.

10. Verbindungsanordnung nach Anspruch 9, dadurch gekennzeichnet, daß die kraftschlüssige Verbindung als radiale Führung ausgeführt ist.

11. Verbindungsanordnung nach Anspruch 8, 9 oder 10, dadurch gekennzeichnet, daß die formschlüssige, lösbare Verbindung als Klemmverschraubung ausgeführt ist.

12. Verbindungsanordnung nach Anspruch 8, 9, 10 oder 11, dadurch gekennzeichnet, daß die formschlüssige, unlösbare Verbindung als verstemmte Durchstanzung (22, 23) ausgeführt ist.

13. Verbindungsanordnung nach einem der vorangehenden Ansprüche, dadurch gekennzeichnet, daß das Antriebs- und das Abtriebselement (1, 2) bezüglich der gemeinsamen Drehachse (24) symmetrisch, koaxial und/oder als zueinander konzentrische, vorzugsweise flache Ringkörper oder als Antriebs- beziehungsweise Kraftübertragungsflansche angeordnet beziehungsweise ausgebildet sind.
